Europäisches Patentamt

European Patent Office

Office européen des brevets

(11) Veröffentlichungsnummer: **0 303 071 B1**

(12) **EUROPÄISCHE PATENTSCHRIFT**

(45) Veröffentlichungstag der Patentschrift: **30.10.91**

(21) Anmeldenummer: **88111641.2**

(22) Anmeldetag: **20.07.88**

(51) Int. Cl.⁵: **C04B 28/14**, C09D 5/34,
//(C04B28/14,14:24,18:24,24:26)

(54) **Fugenfüller.**

(30) Priorität: **08.08.87 DE 3726470**

(43) Veröffentlichungstag der Anmeldung:
**15.02.89 Patentblatt 89/07**

(45) Bekanntmachung des Hinweises auf die
Patenterteilung:
**30.10.91 Patentblatt 91/44**

(84) Benannte Vertragsstaaten:
**AT BE CH DE ES FR GB GR IT LI LU NL SE**

(56) Entgegenhaltungen:
EP-A- 0 227 876
FR-A- 2 329 608
US-A- 2 806 008
US-A- 3 297 601
US-A- 4 391 647

CHEMICAL ABSTRACTS, Band 105, Nr. 26,
Dezember 1986, Seite 299. Ref. Nr.231525c,
Columbus, Ohio, US; & JP-A-61 122 148
(OSAKA CEMENT CO. LTD) 10-06-1986

CHEMICAL ABSTRACTS, Band 95, Nr. 1, Juli
1981, Seite 285, Ref. Nr. 11668m, Columbus,
Ohio, US; & JP-A-81 17 963 (KURARAY CO.

LTD) 20-02-1981

(73) Patentinhaber: **Rigips GmbH**
**Rühler Strasse**
**W-3452 Bodenwerder(DE)**

(72) Erfinder: **Rennen, Heinz, Dr.**
**Junkergrund 25**
**W-3452 Bodenwerder(DE)**
Erfinder: **Gutacker, Herbert**
**Brückenstrasse 2**
**W-3451 Lürdissen(DE)**

(74) Vertreter: **Rücker, Wolfgang, Dipl.-Chem. Pa-**
**tentanwalt**
**Bergiusstrasse 2b**
**W-3000 Hannover 51(DE)**

**Beschreibung**

Die Erfindung betrifft einen Fugenfüller unter Verwendung von Kalziumsulfathalbhydrat zum Verspachteln der Fugen, die durch das Aneinanderstoßen zweier Kanten von Gipskartonplatten entstehen.

Die Gipskartonplatte ist ein Bauelement, welches aus dem Baugewerbe nicht mehr wegzudenken ist und insbesondere für den Innenausbau eine außerordentliche Bedeutung besitzt.

Gipskartonplatten gemäß DIN 18180 werden in großen Mengen vorzugsweise in kontinuierlicher Weise auf großen Bandanlagen hergestellt und finden Verwendung zur Herstellung von Wänden in einfacher und doppelter Ständerausführung als Vorsatzschalen zur Herstellung von Decken und zum Zwecke des Brandschutzes und dgl. mehr.

Die Gipskartonplatte besteht aus einem breit ausgewalzten Gipskern, der einschließlich der Längskanten mit Karton ummantelt ist, während die geschnittenen Querkanten den Gipskern zeigen. Der Karton ist mit dem Gipskern fest verbunden, und der Gipskern kann geeignete Zuschlag- oder Zusatzstoffe enthalten und aufgeport sein.

Die Gipskartonplatten werden rechteckig, in der Regel großflächig, mit Breiten von 125 cm und Längen bis zu 450 cm und Dicken bis zu 25 mm hergestellt. Ihre vortrefflichen Eigenschaften beruhen auf der Verbundwirkung von Gipskern und Kartonummantelung; wobei der Karton als Zugbewehrung wirkt und der Platte im festen Verbund mit dem Gipskern die notwendige Steifigkeit verleiht.

Bei der Fertigung wird der Karton, der die Ansichtsseite der Gipskartonplatte bildet, von einem großen Rollenvorrat abgezogen, zu einer den Gipsbrei aufnehmenden flachen rechteckigen Wanne geformt, die hochstehenden seitlichen Kartonränder bei der Kalibrierung der Platte auf die freie Oberfläche des Gipsbreies niedergedrückt, worauf der Rückseitenkarton aufgebracht und nach Einsetzen des Abbindevorganges der Plattenstrang auf die bestimmten Längen geschnitten wird.

Bei der Herstellung der Platte werden also die seitlichen, in Fertigungsrichtung verlaufenden Kanten der Gipskartonplatte in bestimmter Weise geformt. Die Form dieser Kanten der Gipskartonplatte ist wichtig für die spätere Verarbeitung der Gipskartonplatte.

Da die Gipskartonplatte meist so verarbeitet wird, daß die Längskanten vertikal stehen, die Platte indessen in Längsrichtung meist geschoßhohe Abmessungen haben kann, aber in ihrer Breite aus herstellungstechnischen Gründen beschränkt ist, entstehen Stoßfugen zwischen aneinandergestoßenen Platten, die, will man eine einheitliche fugenlose Fläche haben, geschlossen werden müssen. Zu diesem Zweck verwendet man einen Fugenfüller und einen Bewehrungsstreifen, mit welchen die Plattenfugen vertikal und horizontal verspachtelt werden.

Fugenfüller auf Gipsbasis gehören nach DIN 1168 zu den Fugen-und Spachtelgipsen und werden meistens aus Stuckgips hergestellt. Sie sind mit Stellmitteln versehen. Um sie an die zu lösenden Aufgaben anzupassen, können sie auch geringe Mengen Kunstharzdispersionen als Haftvermittler enthalten. Es sind auch Fugenfüller auf Kaseinbasis bekannt und solche in Dispersionsform, die ohne Zusatz von Wasser verarbeitbar sind (Hanusch, "Gipskartonplatten", Trockenbau, Montagebau, Ausbau, 1. Auflage, 1978).

Der Fugenfüller soll die Fuge so ausfüllen, daß sie in der fertiggestellten Wand nicht mehr sichtbar ist, daß sie dauerhaft ist, eine gewisse Festigkeit einerseits, aber auch eine bestimmte Elastizität andererseits aufweist, nicht reißt, vorzugsweise ohne Papier oder Vliesstreifen als Bewehrungseinlage auskommt und eine Nacharbeitbarkeit gestattet.

Die Kante der Gipskartonplatte kann unterschiedliche Ausgestaltung haben. Am verbreitetsten ist die abgeflachte Kante. Es kommen jedoch in letzter Zeit auch abgerundete, gewinkelte Kanten oder Kombinationen solcher Kantenformen vor.

Es ist auch vorgeschlagen worden, eine besondere Kantenform mit einer besonderen Zusammensetzung eines Fugenfüllers aus α -Gips mit weiteren Zusätzen, wie Polyvinylalkohol, Asbest oder Bentonit und einem bestimmten Anmachwasser/Feststoffverhältnis zu kombinieren, wobei die Kante für diesen Fugenfüller viertelkreisförmige Gestalt hat (DE-OS 32 18 397).

Nachteilig bei dieser Ausgestaltung ist wegen der sehr hohen Eigenfestigkeit bzw. Sprödigkeit des abzubindenden Fugenfüllers die zu geringe Elastizität, so daß hierdurch die Fuge bei mechanischer Belastung reißen kann.

Aus der DE-OS 35 42 262 ist ebenfalls eine besondere Kante, bestehend aus einem abgerundeten und abgeflachten Teil mit einem speziellen Fugenfüller kombiniert, der auf der Basis von α- Gips mit verschiedenen Zusätzen aufgebaut ist. Auch hier besteht wieder das Problem, daß dieser Fugenfüller eine zu geringe Elastizität aufweist.

Schließlich ist auch vorgeschlagen worden, den Verspachtelungsvorgang der Fuge mit zwei unterschiedlichen Fugenfüllern durchzuführen, und zwar einem Fugenfüller, der im wesentlichen die Festigkeit verleiht und einem Fugenfüller, der Elastizität gibt und welcher zuletzt aufgetragen wird.

All diese Lösungen befriedigen in Teilbereichen vollständig, jedoch wäre ein Fugenfüller wünschenswert, der generell verwendbar ist, gleich um welche Fuge es sich handelt und der eine geschlossene dauerhafte Fuge gewährleistet, die nicht sichtbar ist, keine Aufwölbung ergibt, nicht reißt und außerdem die erforderliche Elastizität besitzt und die Verwendung des üblichen aus Papier- oder Glasfasern bestehenden Bewehrungsstreifens überflüssig macht.

Vorzugsweise hat der erfindungsgemäße Fugenfüller die nachfolgende Zusammensetzung:

| | |
|---|---|
| 10 bis 25 Gew.-% | eines feinteiligen redispergierbaren Vinylazetat-Ethylen-Kopolymers, |
| 30 bis 40 Gew.-% | Stuckgips, |
| 10 bis 25 Gew.-% | druckbeständige Silikat-Mikrohohlkugeln (Mikrohohlglaskugeln) mit einer Körnung bis 150 μm, |
| 0,5 bis 2 Gew.-% | Polyvinylalkohol |
| 0,5 bis 2,5 Gew.-% | Zellulosefasern, |
| 0,5 bis 1 Gew.-% | Methylzellulose, |
| Rest | Hilfsstoffe, wie Haftvermittler, Beschleuniger, Verzögerer, Konsistenzregler und Kalziumkarbonat als Füllstoff |

Gelöst wird diese Aufgabe durch einen Fugenfüller, bestehend aus einem Anteil redispergierbarem feinteiligem Vinylazetat-Ethylen-Kopolymer und einem Anteil Stuckgips, im wesentlichen ß-Gips, einem Anteil sogenannter Mikroglaskugeln zur Verbesserung der Verarbeitung und Reduzierung des Einfallens in der Fuge und weiteren Zusätzen zur Haftvermittlung, zur Armierung sowie zur Beschleunigung, Verzögerung, zur Konsistenzregelung sowie einem Restanteil Füllstoff.

Vorteilhaft wirkt sich dabei aus, daß diese Mischung einen Anteil an sogenannten Mikroglaskugeln, vorzugsweise in einer Körnung bis zu maximal 150 μm, enthält.

Es hat sich gezeigt, daß ein solcher Anteil die Verarbeitbarkeit der Masse erleichtert und das Einfallen der gespachtelten Fuge verhindert. Der Polyvinylalkohol ist in bekannter Weise als Haftvermittler zugegen, und zur Armierung dienen Zellulosefasern. Methylzellulose dient der Wasserretention. Dieser Ansatz wird unter Zugabe von Wasser zu einer pastösen plastischen Spachtelmasse verarbeitet und in bekannter Weise angewandt.

Bei diesem erfindungsgemäßen Fugenfüller ist das redispergierbare Kopolymer aus Vinylazetat und Ethylen das eigentliche Bindemittel, durch das der Fugenfüller und damit die Fuge die Festigkeit erhält. Wie später noch gezeigt werden wird, ist dadurch die Elastizität wesentlich höher als bei einem Fugenfüller auf Halbhydratbasis, sei es ß-, sei es α-Halbhydrat. Der Anteil Stuckgips, bei dem es sich im wesentlichen um ß-Halbhydrat handelt, den der Fugenfüller enthält, dient lediglich zur Steuerung der Abbindezeiten des Fugenfüllers; es wird dadurch erreicht, daß eine Weiterverarbeitung der Fuge nach ca. 30 bis 40 Minuten nach dem Verspachteln möglich ist.

Die zugesetzten 10 bis 25 Gew.-% Mikrohohlglaskugeln in der angegebenen Körnung bis maximal 150 μm erleichtern die Verarbeitbarkeit, insbesondere den Verspachtelungsvorgang und verhindern das Einfallen der gespachtelten Fuge.

Der Polyvinylalkohol ist als zusätzlicher Haftvermittler zugegen, und die Zellulosefasern dienen der Armierung.

Die nachfolgende Tabelle zeigt deutlich den technischen Fortschritt, der mit diesem Fugenfüller erzielt wird. Sie zeigt verschiedene Fugenfüller, wobei jeweils angegeben ist die Fugenfestigkeit in N/cm sowie als Maß für die Elastizität die Durchbiegung bis zum Bruch bei Längsfugen und Querfugen.

Tabelle

| Nr. | Vorspachtel / Nachspachtel | Bewehrung | Längsfugen | | Querfugen | |
|---|---|---|---|---|---|---|
| | | | Festigkeit | Durchbiegung | Festigkeit | Durchbiegung |
| 1 | ß-Gips geb. FF / ß-Gips geb. FF | Glasfaser-streifen | 10 N/cm | 2,0 mm | 10 N/cm | 2,0 mm |
| 2 | α-Gips geb.FF / α-Gips geb. FF | ohne | 9 N/cm | 0,5 mm | 10 N/cm | 0,3 mm |
| 3 | ß-Gips geb FF / kunst-stoffgeb. FF (ohne Gips) | ohne | 10 N/cm | 0,8 mm | 4 N/cm | 0,3 mm |
| 4 | erfindungsgemäßer Fugenfüller kunststoff-geb. mit ß-Gips /kunstst-stoffgeb. mit ß-Gips | ohne | 13 N/cm | 1,5 mm | 16 N/cm | 0,6 mm |

FF = Fugenfüller
geb. = gebunden

In der Tabelle ist in Spalte 1 ein ß-gipsgebundener Fugenfüller mit einem Glasfaserbewehrungsstreifen aufgeführt, der auch mit einem ß-gipsgebundenen Fugenfüller nachgespachtelt ist. Diese althergebrachte Fugenverspachtelung gibt durch die Bewehrung eine bestimmte Festigkeit und erkenntlich an der Durchbiegungsmöglichkeit eine bestimmte Elastizität vor.

In Spalte 2 ist ein Fugenfüller auf α-Gipsbasis dargestellt, der ebenfalls mit α-Gips nachgespachtelt ist und eine wesentlich niedrigere Elastizität aufweist.

In Spalte 3 ist ein ß-gipsgebundener Fugenfüller dargestellt, der mit kunststoffgebundenem Fugenfüller ohne Gips nachgespachtelt ist, und in Spalte 4 ist schließlich der erfindungsgemäße Fugenfüller dargestellt.

4

Eine Betrachtung der Festigkeitswerte hinsichtlich Längsfuge und Querfuge zeigt eine deutliche Überlegenheit des erfindungsgemäßen Fugenfüllers hinsichtlich Festigkeit und Elastizität, z.B. das erzielte Verhalten in der Festigkeit (13N/cm) und der reißfreien Durchbiegung von 1,5 mm in der Längsfuge der dem bisherigen Stand der Technik entsprechenden Verspachtelung mit Bewehrungsstreifen (Nr. 1 der Tabelle) am nächsten kommt.

Durch die erfindungsgemäße Kombination des Kopolymers mit dem die Abbindezeit steuernden Anteil an Stuckgips ist ein Fugenfüller gegeben, der unabhängig von der Gestalt der Fuge universell ohne Bewehrungsstreifen verwendbar und in dem erforderlichen Maß und Umfang nacharbeitbar ist.

**Patentansprüche**

1. Fugenfüller unter Verwendung von Kalziumsulfathalbhydrat zum Verspachteln der Fugen, die durch das Aneinanderstoßen zweier Kanten von Gipskartonplatten entstehen, dadurch gekennzeichnet, daß der Fugenfüller aus einem Anteil redispergierbarem feinteiligem Vinylazetat-Ethylen-Kopolymer in einer Menge von 10 - 25 Gew.-% und einem Anteil Stuckgips, im wesentlichen β-Gips, in einer Menge von 30 - 40 Gew.-% und einem Anteil sogenannter Mikroglaskugeln zur Verbesserung der Verarbeitung und Reduzierung des Einfallens in der Fuge und weiteren Zusätzen zur Haftvermittlung, zur Armierung sowie zur Beschleunigung, Verzögerung, zur Konsistenzregelung sowie einem Restanteil an Füllstoffen besteht.

2. Fugenfüller nach Anspruch 1, dadurch gekennzeichnet, daß der Fugenfüller einen Anteil sogenannter Mikroglaskugeln in einer Körnung bis zu maximal 150 μm enthält.

3. Fugenfüller nach Anspruch 1 und 2, dadurch gekennzeichnet, daß der Fugenfüller außerdem einen geringen Anteil Polyvinylalkohol als Haftvermittler enthält, sowie Zellulosefasern zur Armierung und die Hilfsstoffe Beschleuniger, Verzögerer, Wasserretentionsmittel und Konsistenzregler sowie einen Rest Füllstoff in Form von Kalziumkarbonat.

4. Fugenfüller nach Anspruch 1 bis 3, gekennzeichnet durch die folgende Zusammensetzung:

| | |
|---|---|
| 10 bis 25 Gew.-% | eines feinteiligen redispergierbaren Vinylazetat-Ethylen-Kopolymers, |
| 30 bis 40 Gew.-% | Ca SO₄ - Halbhydrat |
| 10 bis 25 Gew.-% | druckbeständige Silikat-Mikrohohlkugeln (Mikrohohlglaskugeln) mit einer Körnung bis 150 μm, |
| 0,5 bis 2 Gew.-% | Polyvinylalkohol, |
| 0,5 bis 2,5 Gew.-% | Zellulosefasern, |
| 0,5 bis 1 Gew.-% | Methylzellulose, |
| Rest | Hilfsstoffe, wie Beschleuniger, Verzögerer, Konsistenzregler und Kalziumkarbonat als Füllstoff. |

**Claims**

1. Joint filler with use of calcium sulphate hemihydrate for pointing the joints resulting from the abutting of two edges of sandwich-type plasterboards, characterized in that the joint filler consists of a portion of redispersible, finely particulate vinyl acetate ethylene copolymer in a quantity of 10 - 25 % by wt. and a portion of plaster of Paris, essentially of β-gypsum, in a quantity of 30 - 40 % by wt. and a portion of so-called glass microspheres for improving workability and reducing collapse in the joint and further admixtures for improving bond, for reinforcement and for acceleration, retardation, consistency control, and a residual portion of fillers.

2. Joint filler according to Claim 1, characterized in that the joint filler contains a portion of so-called glass microspheres in a particle size up to a maximum of 150 μm.

3. Joint filler according to Claims 1 and 2, characterized in that the joint filler contains in addition a small portion of polyvinyl alcohol as bond promoting agent, and also cellulose fibres for reinforcement and the auxiliary substances accelerator, retarder, water-retention agent and consistency regulator, and also a residue of filler in the form of calcium carbonate.

4. Joint filler according to Claims 1 to 3, characterized by the following composition:

5

## EP 0 303 071 B1

| | |
|---|---|
| 10 to 25 % by wt. | of a finely particulate, redispersible vinyl acetate ethylene copolymer, |
| 30 to 40 % by wt. | $CaSO_4$ - hemihydrate |
| 10 to 25 % by wt. | pressure-resistant silicate hollow microspheres (hollow glass microspheres) having a particle size of up to 150 $\mu$m, |
| 0.5 to 2 % by wt. | polyvinyl alcohol, |
| 0.5 to 2.5 % by wt. | cellulose fibres, |
| 0.5 to 1 % by wt. | methyl cellulose, |
| Remainder | auxiliary substances, such as accelerator, retarder, consistency regulator and calcium carbonate as filler. |

**Revendications**

1. Masse de remplissage pour joint avec utilisation de sulfate de calcium semi-hydraté pour l'égalisation des joints résultant de l'assemblage des deux bords de plaques de carton-plâtre, caractérisée en ce que la masse de remplissage pour joint est constituée d'une partie de copolymère à grains fins d'acétate de vinyle et d'éthylène, qui peut être redispersé dans un mélange en proportion de 10 à 25% en poids, d une partie de plâtre en morceaux, qui est essentiellement du plâtre $\beta$, en proportion de 30 à 40% en poids, et d'une part de microbilles de verre pour améliorer la mise en oeuvre et réduire le retrait du joint, ainsi que d'autres additifs pour assurer l'adhérence, pour le renforcement, ainsi que pour accélérer, ralentir et régler la consistance, ainsi qu'une partie restante formée de matière de charge.

2. Masse de remplissage pour joint selon la revendication 1, caractérisée en ce que la masse de remplissage pour joint contient une fraction de microbilles de verre dont la granulométrie est de 150 $\mu$m au maximum.

3. Masse de remplissage pour joint selon la revendication 1 ou 2, caractérisée en ce que la masse de remplissage pour joint contient en outre une faible fraction d'alcool polyvinylique servant d'agent d'adhérence, ainsi que des fibres de cellulose pour le renforcement et des adjuvants servant d'accélérateur, de ralentisseur ou d'agents de rétention d'eau et de régulation de la consistance, ainsi qu'un reste formé d'une matière de charge, sous forme de carbonate de calcium.

4. Masse de remplissage pour joint selon les revendications 1 à 3, caractérisée par la composition suivante:
   10 à 25% en poids d'un copolymère à fine granulométrie d'acétate de vinyle et d'éthylène, qui peut être redispersé,
   30 à 40% en poids de $CaSO_4$ semi-hydraté,
   10 à 25% en poids de microbilles creuses de silicate résistant à la pression (microbilles de verre), ayant une granulométrie de 150 $\mu$m au maximum,
   0,5 à 2% en poids d'alcool polyvinylique,
   0,5 à 2,5% en poids de fibres de cellulose,
   0,5 à 1% en poids de méthylcellulose,
   le reste: adjuvants tels que accélérateur, ralentisseur,
   régulateur de consistance et carbonate de calcium servant de matière de charge.

6